# EUROPEAN PATENT SPECIFICATION

(11) **EP 2 481 328 B1**
(45) Date of publication and mention of the grant of the patent: **12.03.2014**
(21) Application number: 11152610.9
(22) Date of filing: 28.01.2011
(51) Int. Cl.: A47J 31/00, A47J 31/18

(54) **Automated turkish coffee preparation machine**
Maschine zur automatischen Zubereitung von türkischem Kaffee
Machine à café turc automatique

(43) Date of publication of application: 01.08.2012
(73) Proprietor: Eksen Makine Sanayi ve Ticaret A.S., 41480 Kocaeli (TR)
(72) Inventor: Tahincioglu, Besim, 41480, Kocaeli (TR); Kutlay, Engin, 41480, Kocaeli (TR)
(74) Representative: Sevinç, Erkan

(56) References cited:
- EP-A1- 0 589 093
- WO-A2-2011/002421
- US-A- 4 299 119
- US-A- 5 352 866

## Description

### Technical Field of the Invention

The present invention relates to an electrical household appliance and more specifically a Turkish coffee preparation machine.

### Background of the Invention

It is submitted that automated Turkish coffee preparation brings about a plurality of technical problems. The main problem is to prevent overflow of the coffee ingredients in the end of the heating process. This is typically achieved by regulating heat energy transferred to the coffee pot, i.e. by reducing power consumption of the heating elements.

To this end, accurate timing of power reduction is of primary importance. A plurality of coffee machines available in the market makes use of this principle, i.e. reducing heat energy transferred to the coffee pot a certain time period prior to boiling.

Document W02011/002421 A2 discloses a Turkish coffee machine with a temperature sensor and a microprocessor to control the boiling process.

The present invention provides a more improved control scheme to the boiling process where a more accurate control is obtained by way of detecting both the temperature and the viscosity of the coffee being heated. The correlation of the two data is used to assess proper timing for decreasing heat energy timely before boiling occurs.

Further, as different people may prefer Turkish coffee in different densities, proper homogenization of the ingredients is also a necessity and contributes to the overall taste. To this end, the present invention provides an improved agitating mechanism also used in detecting the viscosity of the coffee.

Document EP 0 589 093 A1 discloses a kitchen robot with a mixing arm and a regulation of heating depending, among other parameters, on the viscosity of the agitated substance.

### Objects of the Invention

Primary object of the present invention is to provide a fully automated electrical Turkish coffee preparation apparatus preventing overflow of the coffee.

Another object of the present invention is to provide a fully automated electrical Turkish coffee preparation apparatus having means for homogenizing coffee such that overall taste is improved.

### Summary of the Invention

The present invention proposes a domestic appliance and specifically an electrical household appliance for preparing Turkish coffee. The apparatus comprises an upper receptacle part receiving coffee to be heated and a lower body part under said receptacle comprising control electronics and electrical connectors. An electrical motor is employed to agitate said coffee being heated in water in order for homogenizing coffee ingredients. This is accomplished by said motor's flapping wings. Along with temperature change data, viscosity of the heated liquid is also monitored to determine boiling point and then reduced heating mode is initiated timely before such point whereby overflowing is prevented.

### Brief Description of the Figures

Accompanying drawings are given solely for the purpose of exemplifying a fully automated Turkish coffee machine whose advantages over prior art were outlined above and will be explained in detail hereinafter:

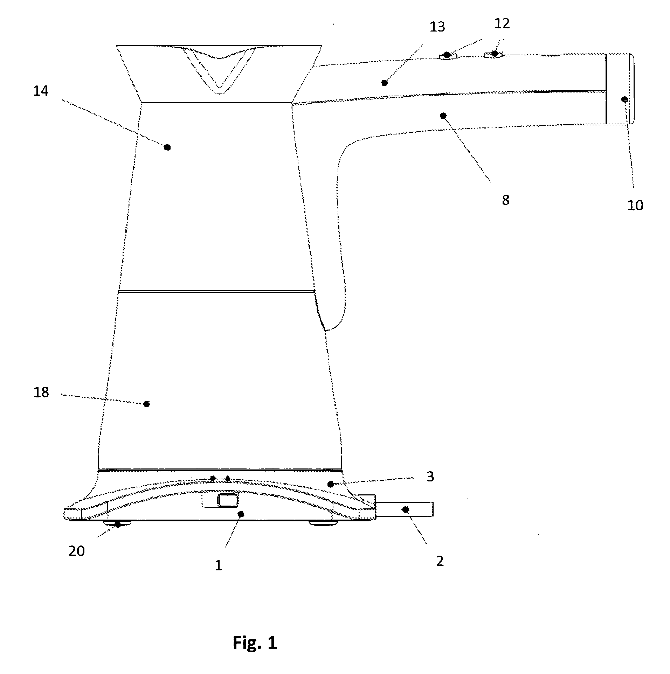

Fig. 1 demonstrates a lateral view of the Turkish coffee apparatus according to the present invention.

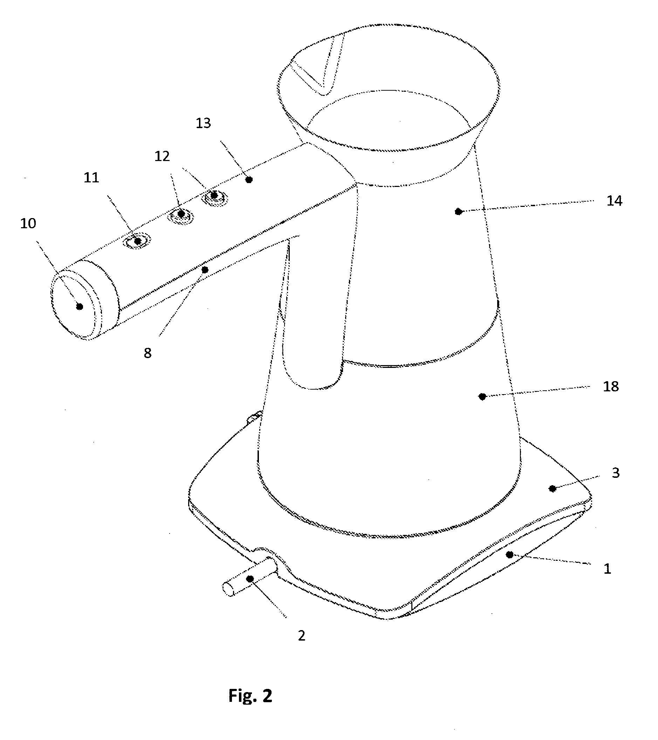

Fig. 2 demonstrates a perspective view of the Turkish coffee apparatus according to the present invention.
Fig. 3 demonstrates a lateral cross-sectional view of the Turkish coffee apparatus according to the present invention.
Fig. 4a demonstrates temperature change over time and Fig. 4b demonstrates temperature and viscosity relationship.
Fig. 4c represents experimental data as to the relationship between temperature and viscosity.

### Detailed Description of the Invention

Referring now to the figures outlined above, the present invention proposes an electrical household appliance for preparing Turkish coffee. A base (3) having a cover (1) and disposed on ground supports (20) is provided with an electrical connection cord (2) as seen in the enclosed figures.

The apparatus comprises an upper receptacle part (14) receiving coffee to be heated and a lower body part (18) under said receptacle (14) comprising control electronics and electrical connectors. The apparatus further comprises a handle (8) with a cover (13) and end closure (10), also having thereon operating buttons (12). A status indication lamp (11) is further provided on said handle (8).

Said Turkish coffee preparation apparatus according to the present invention comprises a heating element (15) in the form of an electrical resistance whose wattage is controlled based on a set of data provided from different sources.

To this end, an electrical motor (16) is employed to agitate said coffee being heated in water in order for homogenizing coffee ingredients. This is accomplished by said motor's (16) flapping wings (7). It is established that along with temperature change data, viscosity of the heated liquid can also be monitored to determine boiling point and then directly or dynamically switch to reduced heating mode timely before such point whereby overflowing is prevented.

Said flapping wings (7) according to the present invention are rotated at a speed effecting homogenization and also contributing to the maturity of taste.

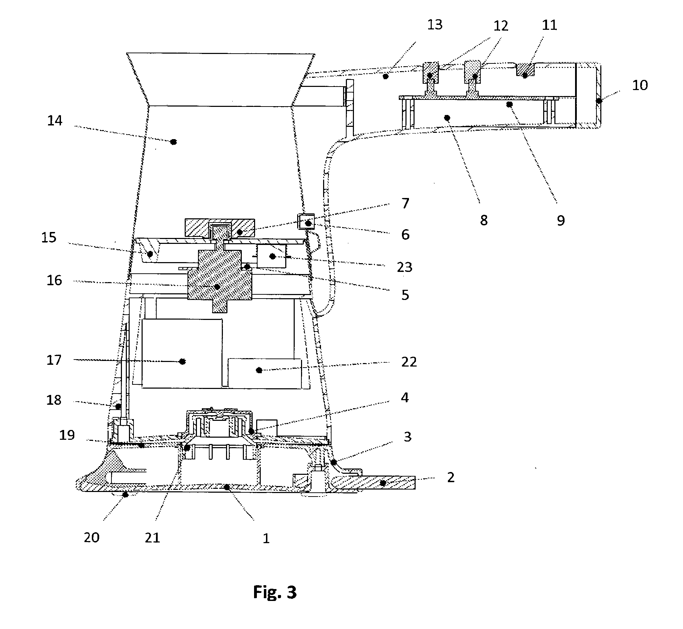

Now referring to Fig. 3, temperature change data according to the present invention is obtained by means of a temperature sensor (6). An electronic circuit (17) uses information obtained from said temperature sensor (6) in addition to the information obtained from a current sensor (22) as explained below.

The apparatus of the present invention relies on the viscosity information when determining boiling point. This is achieved by monitoring motor (16) current by a current sensor (22). The current sensor (22) first determines the initial motor (16) current and then the electronic circuit (17) uses this value as the base to determine boiling point comparing the same to predefined data sets of motor (16) current vs. temperature and viscosity vs. temperature. The initial current of the motor (16) may vary depending on the density of the coffee being heated.

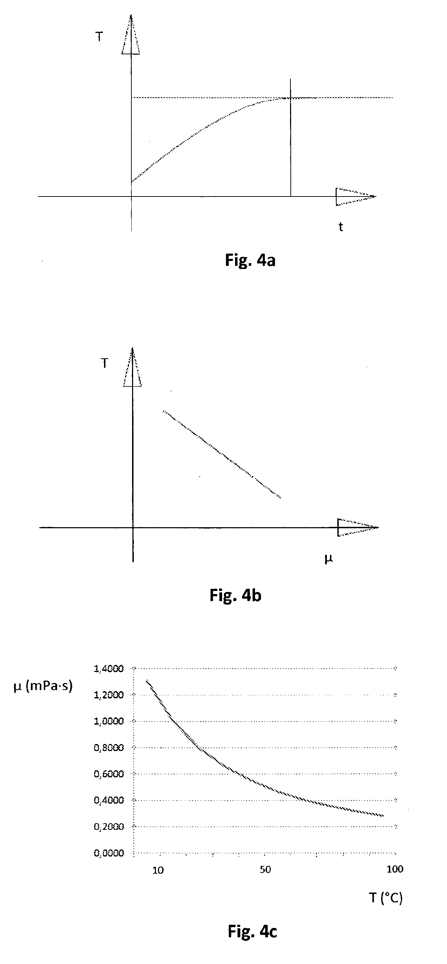

Motor (16) current is indicative of the water resistance which diminishes with temperature rise. Therefore, the water resistance to the motor's (16) flapping wings (7) is used to gradually decrease the power dissipation on the resistive heating element (15). Table I annexed to the detailed description of the invention demonstrates the relationship between the motor (16) current and the temperature change. According to the experimental data as seen therein, motor (16) current diminishes with temperature as the coffee containing water's resistance to the motor's (16) flapping wings (7) is decreased. In other words, the viscosity of the coffee being heated is decreased. The experimental data of the viscosity-temperature relationship is demonstrated in Fig. 4c. Fig. 4a and 4b respectively theoretically demonstrate temperature change over time and temperature and viscosity relationship in a schematized manner.

Further referring to Fig. 3, other components of the automated Turkish coffee preparation apparatus according to the present invention comprises an electrical adaptor (4) powering electrical components of the apparatus, in electrical communication with an electrical connector (21) in said base (3). Said lower body part (18) has a lower cover (19). A conventional thermostat (23) is also coupled for security reasons. A motor fixing plate (5) is used to mechanically support said motor (16). A second electronic circuit (9) is provided in said handle (8) in communication with said operating buttons (12).

To this end, the apparatus of the invention functions as follows: Water and Turkish coffee is added to the receptacle (14) in the desired amounts. Upon switching on of the apparatus by the control buttons (12) on said handle (8), said electrical resistance (15) is powered, said motor (16) starts up and said flapping wings (7) starts rotating accordingly. With the help of said current sensor (22), said electronic circuit (17) defines the initial motor (16) current and determines boiling point comparing motor (16) current and temperature data to predefined data sets of current vs. temperature and viscosity vs. temperature. Monitoring viscosity change provides a more accurate determination of the boiling point rather than monitoring temperature change alone. The electronic circuit (17) dynamically changes instantaneous power of said resistive heating means (15) based on an average value calculated according to the instantaneous temperature and viscosity data with PID (proportional-integral-derivative) control in said electronic circuit (17). A simple arithmetic equation can be used in determining said average value based on instantaneous temperature and viscosity values. For instance, an instantaneous value can first be converted to a percentage value based on its predefined minimum and maximum values and then an average value can be calculated as an arithmetic mean value of the two percentage values of said instantaneous temperature and viscosity values.

Alternatively, the electronic circuit (17) may in a simpler manner reduce power transferred to the resistive heating means (15) when both temperature and viscosity in the receptacle (14) reach a predefined value.

The current sensor (22) may be obtained by a shunt resistor or a Hall effect current sensor. The temperature sensor (6) on the other hand may be an NTC thermistor or a thermocouple.

In a nutshell, the present invention proposes an electrical household appliance and particularly an electrical coffee pot for preparing Turkish coffee comprising a receptacle (14) for receiving coffee ingredients, an electrical heating means (15) for heating said receptacle (14), a temperature sensor (6) for sensing temperature in said receptacle (14) and an electrical motor (16) driving a plurality of flapping wings (7) agitating said coffee ingredients in said receptacle (14). Said appliance further comprises an electronic circuit (17) and a current sensor (22). Said electronic circuit (17) reduces power transferred to said electrical heating means (15) based on the temperature data obtained from said temperature sensor (6) and viscosity data obtained from said current sensor (22).

**Table I: Relationship between motor current and temperature**

| | | **Minimum mA** | | **Maximum mA** | | **Average mA** |
|---|---|---|---|---|---|---|
| | | | | | | |
| **25 C°** | | 111 | | 113 | | 112,00 |
| | | | | | | |
| | | | | | | |
| **35 C°** | | 108,8 | | 111,2 | | 110 |
| | | | | | | |
| | | | | | | |
| **45 C°** | | 108 | | 110,4 | | 109,2 |
| | | | | | | |
| | | | | | | |
| **55 C°** | | 106,8 | | 109 | | 107,90 |
| | | | | | | |
| | | | | | | |
| **65 C°** | | 105,8 | | 107,9 | | 106,85 |
| | | | | | | |
| | | | | | | |
| **75 C°** | | 105,9 | | 108,2 | | 107,05 |
| | | | | | | |
| | | | | | | |
| **85 C°** | | 103,3 | | 106,8 | | 105,05 |
| | | | | | | |
| | | | | | | |
| **95 C°** | | 102,4 | | 106,3 | | 104,35 |
| | | | | | | |
| **100 C°** | | 102 | | 105,3 | | 103,65 |

## Claims

1. An electrical coffee pot for preparing Turkish coffee comprising a receptacle (14) for receiving coffee ingredients, an electrical heating means (15) for heating said receptacle (14), a temperature sensor (6) for sensing temperature in said receptacle (14) and an electrical motor (16) driving a plurality of flapping wings (7) agitating said coffee ingredients in said receptacle (14), said electrical coffee pot further comprising an electronic circuit (17) and a current sensor (22) **characterized in that**;
said electronic circuit (17) reduces power transferred to said electrical heating means (15) based on the temperature data obtained from said temperature sensor (6) and viscosity data obtained from said current sensor (22) in the manner that power transferred to said electrical heating means (15) is reduced timely before a boiling point whereby overflowing of the coffee ingredients is prevented.

2. An electrical coffee pot as set forth in Claim 1 wherein said electronic circuit (17) dynamically reduces instantaneous power of said resistive heating means (15) with PID control based on an average value calculated according to the instantaneous temperature and viscosity data.

3. An electrical coffee pot as set forth in Claim 1 wherein said electronic circuit (17) reduces power transferred to said electrical heating means (15) when temperature and viscosity in the receptacle (14) respectively reach a predefined value.

4. Method of preparing Turkish coffee comprising the steps of heating coffee ingredients with an electrical heating means (15) in a receptacle (14), monitoring temperature change in said receptacle (14), monitoring viscosity change in said receptacle (14) by means of current sensor (22) sensing of a motor's (16) current, said motor (16) driving a plurality of flapping wings (7) agitating said coffee ingredients in said receptacle (14) and said method further comprising the step of reducing power transferred to said electrical heating means (15) based on the temperature change data in said receptacle (14) and viscosity change data obtained from said current sensor (22) in the manner that power transferred to said electrical heating means (15) is reduced timely before a boiling point whereby overflowing of the coffee ingredients is prevented.

## Patentansprüche

1. Eine elektrische Kaffeekanne zur Herstellung von türkischem Kaffee umfassend eine Aufnahme (14) zur Aufnahme von Kaffeebestandteilen, ein elektrisches Heizmittel (15) zum Erhitzen der Aufnahme (14), einen Temperatursensor (6) zum Bestimmen der Temperatur in der Aufnahme (14) und einen elektrischen Motor (16) zum Antreiben einer Vielzahl von Klappflügeln (7) zum Umrühren der Kaffeebestandteile in der Aufnahme (14), wobei die elektrische Kaffeekanne des Weiteren eine elektronische Schaltung (17) und einen Strömungssensor (22) umfasst, **dadurch gekennzeichnet,**
**dass** die elektronische Schaltung (17) die auf das elektrische Heizmittel (15) basierend auf den von dem Temperatursensor (6) erhaltenen Temperaturdaten und den von dem Strömungssensor (22) erhaltenen Viskositätsdaten übertragene Leistung in der Weise reduziert, dass die auf das elektrische Heizmittel (15) übertragene Leistung zeitlich vor Erreichen eines Siedepunkt reduziert wird, wodurch ein Überfließen der Kaffeebestandteile verhindert wird.

2. Elektrische Kaffeekanne gemäß Anspruch 1, wobei die elektronische Schaltung (17) dynamisch unmittelbar die Leistung des Widerstandsheizmittels (15) mit einer PID-Steuerung basierend auf einem gemäß den unmittelbaren Temperatur- und Viskositätsdaten berechneten Mittelwert reduziert.

3. Elektrische Kaffeekanne gemäß Anspruch 1, wobei die elektronische Schaltung (17) die auf das elektrische Heizmittel (15) übertragene Leistung reduziert, wenn die Temperatur und Viskosität in der Aufnahme (14) jeweils einen vorbestimmten Wert erreicht.

4. Verfahren zur Herstellung von türkischem Kaffee umfassend die Schritte des Erhitzens von Kaffeebestandteilen mit einem elektrischen Heizmittel (15) in einer Aufnahme (14), Beobachten der Temperaturänderung in der Aufnahme (14), Verfolgen der Viskositätsänderung in der Aufnahme (14) mittels eines Strömungssensors (22), der eine Strömung eines Motors (16) detektiert, wobei der Motor (16) eine Vielzahl von Klappflügeln (7) antreibt, die die Kaffeebestandteile in der Aufnahme (14) umrühren, und wobei das Verfahren des Weiteren den Schritt der Reduzierung der Leistung umfasst, die auf das elektrische Heizmittel (15) basierend auf den Daten der Temperaturänderung in der Aufnahme (14) und den von dem Strömungssensor (22) erhaltenen Daten zur Viskositätsänderung übertragen wird, in der Weise, dass die Leistung, die auf das Heizungsmittel (15) übertragen wird, rechtzeitig vor Erreichen eines Siedepunktes reduziert wird, wobei ein Überfließen der Kaffeebestandteile verhindert wird.

## Revendications

1. Cafetière électrique pour préparer du café turc comprenant un réceptacle (14) pour recevoir des ingrédients de café, des moyens de chauffage électrique (15) pour chauffer ledit réceptacle (14), un capteur de température (6) pour détecter la température dans ledit réceptacle (14) et un moteur électrique (16) entraînant une pluralité d'ailes battantes (7) agitant lesdits ingrédients de café dans ledit réceptacle (14), ladite cafetière électrique comprenant en outre un circuit électronique (17) et un capteur de courant (22), **caractérisée en ce que** :
ledit circuit électronique (17) réduit l'énergie transférée auxdits moyens de chauffage électrique (15) en fonction des données de température obtenues par ledit capteur de température (6) et des données de viscosité obtenues par ledit capteur de courant (22) de sorte que l'énergie transférée auxdits moyens de chauffage électrique (15) est réduite en temps opportun avant un point d'ébullition, moyennant quoi le débordement des ingrédients de café est empêché.

2. Cafetière selon la revendication 1, dans laquelle ledit circuit électronique (17) réduit dynamiquement l'énergie instantanée desdits moyens de chauffage résistif (15) avec une commande PID en fonction d'une valeur moyenne calculée selon les données de température et de viscosité instantanées.

3. Cafetière selon la revendication 1, dans laquelle ledit circuit électronique (17) réduit l'énergie transférée auxdits moyens de chauffage électrique (15) lorsque la température et la viscosité dans le réceptacle (14) atteignent respectivement une valeur prédéfinie.

4. Procédé pour préparer du café turc, comprenant les étapes consistant à faire chauffer les ingrédients de café avec des moyens de chauffage électrique (15) dans un réceptacle (14), surveiller le changement de température dans ledit réceptacle (14), surveiller le changement de viscosité dans ledit réceptacle (14) au moyen du capteur de courant (22) qui détecte le courant d'un moteur (16), ledit moteur (16) entraînant une pluralité d'ailes battantes (7) agitant lesdits ingrédients de café dans ledit réceptacle (14), et ledit procédé comprenant en outre l'étape consistant à réduire l'énergie transférée auxdits moyens de chauffage électrique (15) en fonction des données de changement de température dans ledit réceptacle (14) et des données de changement de viscosité obtenues dudit capteur de courant (22) de sorte que l'énergie transférée auxdits moyens de chauffage électrique (15) est réduite en temps opportun avant un point d'ébullition, moyennant quoi le débordement des ingrédients de café est empêché.
